# EUROPÄISCHE PATENTANMELDUNG

(11) **EP 4 651 285 A1**
(43) Veröffentlichungstag der Anmeldung: **19.11.2025**
(21) Anmeldenummer: 25170554.7
(22) Anmeldetag: 15.04.2025
(51) Int. Cl.: H01M 50/249, B62J 43/20, B62M 6/90, B62J 43/10

(54) **SYSTEM ZUR SICHERUNG EINER BATTERIE IN EINEM BATTERIEFACH**

(30) Priorität: 17.05.2024 DE 102024113936
(71) Anmelder: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(57) **Zusammenfassung**

Die Erfindung betrifft ein System zur Sicherung einer Batterie in einem Batteriefach, mit einem an der Batterie ausgebildeten und manuell betätigbaren Verriegelungsmechanismus, welcher wenigstens ein Verriegelungselement aufweist, das zur Verriegelung der Batterie in dem Batteriefach mit einem an dem Batteriefach ausgebildeten und dem Verriegelungselement zugeordneten Gegenelement in Eingriff bringbar ist, und mit einem an dem Batteriefach ausgebildeten Blockierelement, durch welches der Verriegelungsmechanismus derart blockierbar ist, dass die in dem Batteriefach verriegelte Batterie nicht entriegelbar ist.

## Beschreibung

Die Erfindung betrifft ein System zur Sicherung einer Batterie in einem Batteriefach.

Derartige Systeme sind grundsätzlich bekannt und umfassen herkömmlicherweise ein an dem Batteriefach ausgebildetes Batterieschloss mit einem Riegel, der zur Sicherung einer in das Batteriefach eingesetzten Batterie einen entsprechend ausgebildeten Vorsprung der Batterie hintergreifen kann.

Der Erfindung liegt die Aufgabe zugrunde ein alternatives System zur Sicherung einer Batterie in einem Batteriefach zu schaffen.

Zur Lösung der Aufgabe ist ein System mit den Merkmalen des Anspruchs 1 vorgesehen.

Konkret umfasst das erfindungsgemäße System einen an der Batterie ausgebildeten und manuell betätigbaren Verriegelungsmechanismus, welcher wenigstens ein Verriegelungselement aufweist, das zur Verriegelung der Batterie in dem Batteriefach mit einem an dem Batteriefach ausgebildeten und dem Verriegelungselement zugeordneten Gegenelement in Eingriff bringbar ist, sowie ein an dem Batteriefach ausgebildetes Blockierelement, durch welches der Verriegelungsmechanismus derart blockierbar ist, dass die in dem Batteriefach verriegelte Batterie nicht entriegelbar ist.

Der Erfindung liegt der allgemeine Gedanke zugrunde, den Verriegelungsmechanismus, d.h. das eigentliche Schloss, nicht wie bei herkömmlichen Systemen in das Batteriefach zu integrieren, sondern umgekehrt an der Batterie vorzusehen, und stattdessen an dem Batteriefach lediglich ein Blockierelement zum Blockieren des Verriegelungsmechanismus sowie wenigstes ein Gegenelement auszubilden. Da das Blockierelement anders als der Riegel eines herkömmlichen Batterieschlosses keine Verriegelungs- oder Haltekräfte aufzunehmen braucht, können das Blockierelement selbst, die Lagerung des Blockierelements sowie auch ein Antrieb für das Blockierelement vergleichsweise klein bzw. schwach dimensioniert werden, wodurch sich Herstellungskosten reduzieren lassen. Gleichzeitig trägt das Blockierelement zu einer sichereren Lagerung der Batterie in dem Batteriefach bei, indem es verhindert, dass der Verriegelungsmechanismus, beispielsweise durch stärkere Schläge, unbeabsichtigt entriegelt und eine unerwünschte Entnahme oder ein unerwünschtes Herausfallen der Batterie aus dem Batteriefach ermöglicht. Letzteres ist insbesondere dann von Vorteil, wenn das Batteriefach an einem Fahrrad, beispielsweise einem Elektrofahrrad, angeordnet ist, insbesondere an der Unterseite eines Unterrohrs des Fahrrads, und die Entnahme der Batterie aus dem Batteriefach nach unten erfolgt. Es versteht sich, dass die Anwendung des Systems nicht auf Fahrräder beschränkt ist, sondern das System grundsätzlich auch bei Motorrädern, Motorrollern, Scootern, Trikes, Quads oder Rollstühlen zum Einsatz kommen kann.

Vorteilhafte Weiterbildungen der Erfindung sind den Unteransprüchen, der Beschreibung und den Zeichnungen zu entnehmen.

Gemäß einer Ausführungsform ist bei blockiertem Verriegelungsmechanismus das wenigstens eine Verriegelungselement der in dem Batteriefach verriegelten Batterie nicht von dem zugeordneten Gegenelement lösbar. Eine unbeabsichtigte Entriegelung des Verriegelungsmechanismus ist in seinem blockierten Zustand somit ausgeschlossen.

Für eine besonders kompakte Bauform des Verriegelungsmechanismus kann das wenigstens eine Verriegelungselement drehbar gelagert und durch eine Verdrehung mit dem zugeordneten Gegenelement in Eingriff bringbar oder von diesem lösbar sein. Es versteht sich, dass das Verriegelungselement grundsätzlich aber auch durch eine Verschiebung mit dem zugeordneten Gegenelement in Eingriff bringbar oder von diesem lösbar sein kann. Es kommen sogar Kombinationen aus Rotations- und Translationsbewegungen in Frage.

Das Blockierelement kann bei blockiertem Verriegelungsmechanismus eine Bewegung, insbesondere Verdrehung, des wenigstens einen Verriegelungselements verhindern. Beispielsweise kann das wenigstens eine Verriegelungselement hierzu zwischen dem Blockierelement und dem Gegenelement fixierbar sein.

Gemäß einer Ausführungsform ist der Verriegelungsmechanismus an einer Stirnseite der Batterie angeordnet. Gemäß einer weiteren Ausführungsform ist der Verriegelungsmechanismus zu einer sich in Längsrichtung der Batterie erstreckenden Ebene spiegelsymmetrisch ausgebildet. So kann der Verriegelungsmechanismus zwei Verriegelungselemente aufweisen, denen jeweils ein Gegenelement des Batteriefachs zugeordnet ist. Dies sorgt nicht nur für eine Aufteilung der Verriegelungskräfte, sondern ermöglicht auch eine symmetrische Verteilung derselben, wodurch die Sicherheit der Batterieverriegelung insgesamt noch weiter erhöht ist.

Für eine besonders kompakte Bauform des Verriegelungsmechanismus können beide Verriegelungselemente drehbar gelagert und durch eine Verdrehung in entgegengesetzte Richtungen mit dem zugeordneten Gegenelement in Eingriff bringbar oder von diesem lösbar sind.

Ferner kann das Blockierelement bei blockiertem Verriegelungsmechanismus eine Bewegung, insbesondere Verdrehung, beider Verriegelungselemente verhindern. Es werden also keine zwei Blockierelemente benötigt, sondern die Verriegelungselemente werden durch ein und dasselbe Blockierelement blockiert, was zu einer einfachen Bauform beiträgt.

Beispielweise können die Verriegelungselemente durch eine Bewegung aufeinander zu von ihren zugeordneten Gegenelementen lösbar sein, während das Blockierelement bei blockiertem Verriegelungsmechanismus derart zwischen den Verriegelungselementen angeordnet ist, dass diese Bewegung verhindert wird.

Gemäß einer weiteren Ausführungsform ist das wenigstens eine Verriegelungselement manuell betätigbar, insbesondere manuell verdrehbar, um von dem zugeordneten Gegenelement gelöst zu werden. Das Verriegelungselement ermöglicht mit anderen Worten eine manuelle Entriegelung des Verriegelungsmechanismus.

Beispielsweise kann das wenigstens eine Verriegelungselement als zweiarmiger Hebel ausgebildet sein. Dabei kann ein erster Arm des Hebels einen mit dem zugeordneten Gegenelement in Eingriff bringbaren oder von diesem lösbaren Verriegelungsabschnitt ausbilden. Ein zweiter Arm des Hebels kann einen durch einen Benutzer betätigbaren Betätigungsabschnitt ausbilden. Für die manuelle Bedienung durch den Benutzer ist der Betätigungsabschnitt insbesondere ergonomisch ausgestaltet.

Sofern der Verriegelungsmechanismus zwei Verriegelungselemente aufweist, können die Drehachsen der Hebel zusammenfallen, so dass sich die Hebel scherenartig simultan in entgegengesetzte Richtungen verdrehen und sich die Verriegelungselemente dementsprechend simultan von ihren Gegenelementen lösen lassen.

Gemäß einer weiteren Ausführungsform ist das Blockierelement zwischen einer den Verriegelungsmechanismus blockierenden Stellung und einer den Verriegelungsmechanismus freigebenden Stellung verlagerbar. Dabei kann die Verlagerung des Blockierelements auf mechanische und/oder elektrische und/oder elektromagnetische Weise bewirkbar sein. Beispielsweise kann zu diesem Zweck ein am Batteriefach ausgebildeter Elektromotor oder Elektromagnet oder Schließzylinder vorgesehen sein. Dabei kann der Schließzylinder durch einen physischen Schlüssel betätigbar sein.

Nachfolgend wird die Erfindung rein beispielhaft anhand einer möglichen Ausführungsform unter Bezugnahme auf die beigefügte Zeichnung beschrieben.
- Fig. 1: ist eine schematische Ansicht eines erfindungsgemäßen Systems mit einem verriegelten und blockierten Verriegelungsmechanismus.
- Fig. 2: ist eine schematische Ansicht des Systems von Fig. 1 mit verriegeltem, aber freigegebenem Verriegelungsmechanismus.
- Fig. 3: ist eine schematische Ansicht des Systems von Fig. 1 mit entriegeltem Verriegelungsmechanismus.
- Fig. 4: ist eine schematische Ansicht des Systems von Fig. 1 in einer Zwischenlage mit verriegeltem Verriegelungsmechanismus.
- Fig. 5: ist eine schematische Ansicht des Systems von Fig. 1 in einer Zwischenlage mit entriegeltem Verriegelungsmechanismus.
- Fig. 6: ist eine schematische Ansicht eines alternativen erfindungsgemäßen Systems mit einem verriegelten und blockierten Verriegelungsmechanismus.

In den Figuren ist ein System zur Sicherung einer Batterie 10 in einem Batteriefach eines Elektrofahrrads gezeigt. Beispielsweise kann das nicht genauer dargestellte Batteriefach an der Unterseite eines Unterrohrs des Elektrofahrrads angeordnet sein.

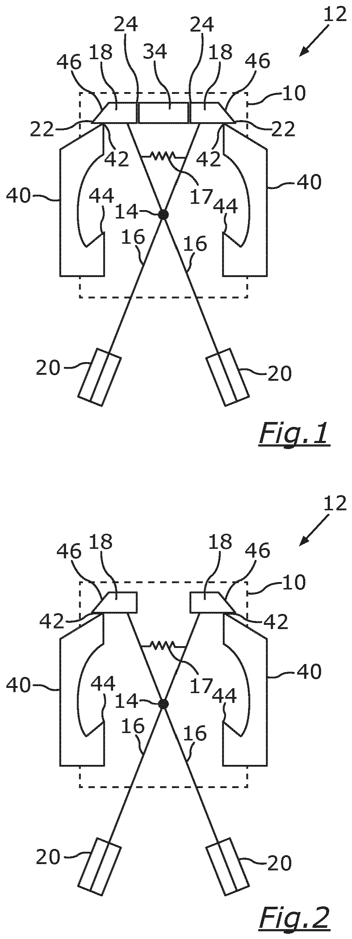

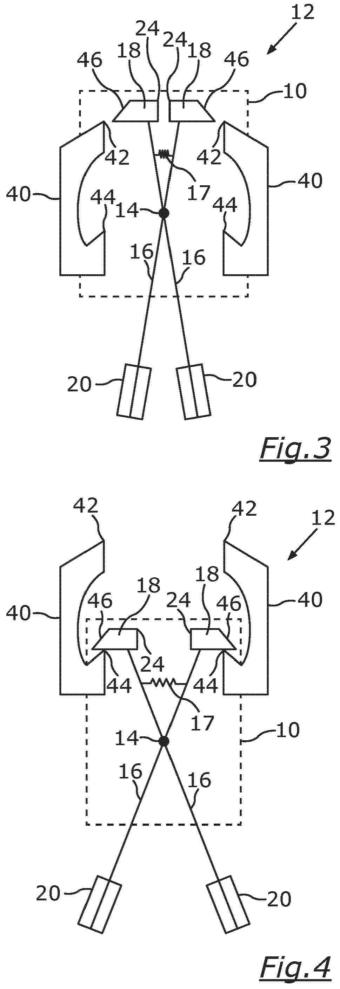

Zur Verriegelung der Batterie 10 in dem Batteriefach ist ein Verriegelungsmechanismus 12 an einer Stirnseite der Batterie 10 vorgesehen. Der Verriegelungsmechanismus 12 ist zu einer sich in Längsrichtung der Batterie 10 (in den Figuren senkrecht zur Blattebene) erstreckenden Ebene spiegelsymmetrisch ausgebildet und umfasst zwei Verriegelungselemente 16, welche um eine gemeinsame, sich in Längsrichtung der Batterie 10 erstreckende Drehachse 14 drehbar gelagert sind. Dabei erfolgt die Verdrehung der Verriegelungselemente 16 aus einer in Fig. 1 und 2 gezeigten Verriegelungsposition in eine in Fig. 3 gezeigte Entriegelungsposition entgegen der Rückstellkraft wenigstens eines Federelements, z.B. einer zwischen den Verriegelungselementen 16 angeordneten Druckfeder 17.

Jedes Verriegelungselement 16 ist nach Art eines zweiarmigen Hebels ausgebildet und umfasst einen in den Figuren von der Drehachse 14 nach oben weisenden ersten Arm mit einem Verriegelungsabschnitt 18 und einen in den Figuren von der Drehachse 14 nach unten weisenden zweiten Arm mit einem Betätigungsabschnitt 20. Jeder Verriegelungsabschnitt 18 bildet einen nach außen weisenden Fanghaken 22 und einen nach innen weisenden Blockadeanschlag 24 aus. Die Betätigungsabschnitte 20 sind zur manuellen Betätigung durch einen Benutzer vorgesehen.

Drückt der Benutzer die Betätigungsabschnitte 20 der Verriegelungselemente 16 zusammen, so verdrehen die Verriegelungselemente 16 entgegen der Rückstellkraft des Federelements 17 und die Verriegelungsabschnitte 18 schwenken nach innen. Lässt der Benutzer die Betätigungsabschnitte 20 los, so werden die Verriegelungselemente 16 durch das Federelement 17 wieder in die Verriegelungspositionen zurückgedreht.

Zur Sicherung des Verriegelungsmechanismus 12 gegen eine unbefugte Entriegelung ist ein Blockierelement 34 batteriefachseitig vorgesehen. Das Blockierelement 34 ist zwischen einer Blockierstellung (Fig. 1) und einer Freigabestellung (Fig. 2) bewegbar. Im gezeigten Ausführungsbeispiel ist das Blockierelement 34 in Längsrichtung der Batterie 10 verschiebbar, in den Figuren also senkrecht zur Blattebene. Dabei ragt das Blockierelement 34 in der Blockierstellung (Fig. 1) zwischen die Verriegelungselemente 16, während es in der Freigabestellung (Fig. 2) so weit zurückgezogen ist, dass es sich außerhalb des Wirkungsbereichs der Verriegelungselemente 16 befindet. Konkret ist eine Breite des Blockierelements 34 an den Abstand angepasst, den die Blockadeanschläge 24 der in der Verriegelungsposition befindlichen Verriegelungselemente 16 zueinander aufweisen. Versucht der Benutzer die Betätigungsabschnitte 20 im blockierten Verriegelungszustand zusammenzudrücken, schlagen die Verriegelungselemente 16 somit ohne signifikante Bewegung an dem Blockierelement 34 an und können folglich nicht in ihre Entriegelungspositionen aufdrehen. Durch die simultane Kraftbeaufschlagung des Blockierelements 34 in entgegengesetzte Richtungen, annullieren sich die Kräfte zumindest annähernd vollständig am Blockierelement 34. Die Kräfte diese brauchen also nicht in einem Lager des Blockierelements 34 aufgenommen werden, so dass das Lager entsprechend klein dimensioniert werden kann.

Zur Bewegung des Blockierelements 34 aus der Blockierstellung in die Freigabestellung und umgekehrt ist im vorliegenden Ausführungsbeispiel ein durch einen physischen Schlüssel betätigbarer Schließzylinder (nicht gezeigt) an dem Batteriefach vorgesehen. Es versteht sich, dass die Bewegung des Blockierelements 34 alternativ auch elektrisch realisiert werden kann, beispielsweise durch einen Elektromotor oder durch einen elektromagnetischen Aktuator.

Zur Sicherung der in das Batteriefach eingesetzten Batterie 10 wirken die Verriegelungselemente 16 mit zwei Gegenelementen 40 zusammen, welche einander gegenüberliegend an dem Batteriefach vorgesehen sind. Hierzu bilden die Gegenelemente 40 jeweils einen nach innen weisenden ersten Rastvorsprung 42 aus, welcher im verriegelten Zustand des Verriegelungsmechanismus 12, d.h. bei in Verriegelungsposition befindlichen Verriegelungselementen 16, von dem Fanghaken 22 des zugeordneten Verriegelungselements 16 hintergriffen wird, so dass die Batterie 10 nicht - in den Figuren nach unten - aus dem Batteriefach entnommen werden kann.

Für eine Entnahme der Batterie 10 aus dem Batteriefach muss zunächst das Blockierelement 34 in die Freigabestellung gebracht werden (Fig. 2), im vorliegenden Ausführungsbeispiel durch Verdrehen des Schlüssels in dem Schließzylinder, damit der Benutzer durch Zusammendrücken der Betätigungsabschnitte 20 die Verriegelungselemente 16 in ihre Entriegelungsposition verdrehen kann (Fig. 3). Sobald sich die Verriegelungselemente 16 von den ersten Rastvorsprüngen 42 der Gegenelemente 40 gelöst haben, kann der Benutzer die Batterie 10 mit Hilfe der Betätigungsabschnitte 20 aus dem Batteriefach herausziehen.

Sofern das Batteriefach an der Unterseite eines Unterrohrs eines Fahrrads angeordnet ist und die Batterie 10 nach unten aus dem Batteriefach entnommen wird, besteht die Gefahr, dass die Batterie 10 bei in Entriegelungsposition befindlichen Verriegelungselementen 16 auch ohne Zug an den der Betätigungsabschnitten 20 schwerkraftbedingt aus dem Batteriefach herausfällt. Zur Vermeidung eines unkontrollierten Herausfallens der Batterie 10 bildet jedes Gegenelement 40 daher einen in Entnahmerichtung gesehen zu dem ersten Rastvorsprung 42 beabstandeten zweiten Rastvorsprung 44 aus, an dem der Fanghaken 22 des zugeordneten Verriegelungselements 16 einrasten kann, um die Batterie 10 in einer Zwischenlage zu halten, in welcher die Batterie 10 in dem Batteriefach gesichert, aber nicht elektrisch angeschlossen ist (Fig. 4).

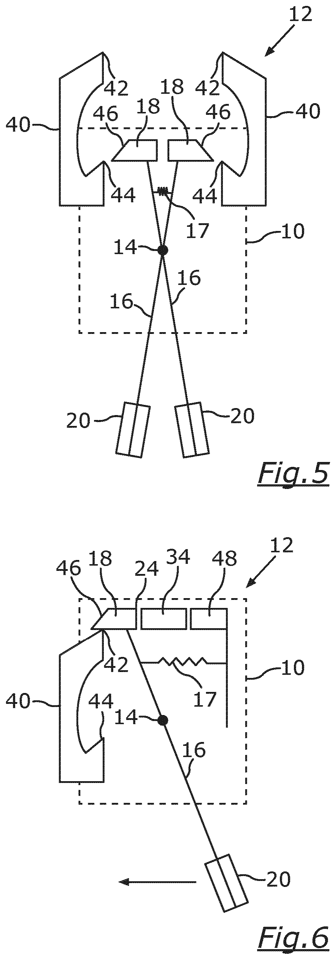

Um die Batterie 10 aus dieser Zwischenlage vollständig aus dem Batteriefach zu entnehmen, braucht der Benutzer nur ein weiteres Mal die der Betätigungsabschnitte 20 zusammenzudrücken, um die Verriegelungselemente 16 erneut in ihre Entriegelungsposition zu bringen und die Fanghaken 22 auch von den zweiten Rastvorsprüngen 44 zu lösen (Fig. 5A und 5B).

Zum Einsetzen der Batterie 10 in das Batteriefach braucht die Batterie 10 lediglich in das Batteriefach hineingedrückt zu werden. Die Verriegelungsabschnitte 18 der Verriegelungselemente 16 weisen an ihren den Fanghaken 22 abgewandten Oberseiten Anlaufschrägen 46 auf, welche beim Hineindrücken der Batterie 10 in das Batteriefach auf die Rückseiten der Rastvorsprünge 42, 44 der Gegenelemente 40 auflaufen, wodurch die Verriegelungsabschnitte 18 nach innen gedrängt und die Verriegelungselemente 16 in die Entriegelungsposition verdreht werden. Durch das Federelement 17 werden die Verriegelungselemente 16 wieder zurück in die Verriegelungsposition gebracht, sobald sich die Fanghaken 22 an den Rastvorsprüngen 42, 44 vorbeibewegt haben. Sobald die Batterie 10 ihre Endlage in dem Batteriefach erreicht hat und die Fanghaken 22 die ersten Rastvorsprünge 42 hintergreifen, lässt sich das Blockierelement 34 wieder in seine Blockierstellung zwischen den Verriegelungselementen 16 verlagern, beispielsweise durch entsprechende Verdrehung des in den Schließzylinder eingeführten Schlüssels.

Abschließend sei darauf hingewiesen, dass der Verriegelungsmechanismus 12 nicht notwendigerweise spiegelsymmetrisch ausgebildet sein oder zwei Verriegelungselemente 16 aufweisen muss. So ist es gemäß der in Fig. 6 gezeigten Ausführungsform auch ein Verriegelungsmechanismus 12 mit nur einem drehbar gelagerten, als zweiarmiger Hebel ausgebildeten Verriegelungselement 16 vorstellbar, welcher durch einen Benutzer verdrehbar ist, um in der voranstehend beschriebenen Weise von einem Gegenelement 40 gelöst zu werden. Die Verdrehung des Verriegelungselements 16 wird im Verriegelungszustand auch bei dieser Ausführungsform durch ein wie oben beschrieben verlagerbares Blockierelement 34 blockiert. Dabei kann der Verriegelungsmechanismus 12 für eine bessere Kraftaufnahme ein feststehendes Gegenlager 48 auf der dem Blockadeanschlag 24 des Verriegelungselements 16 gegenüberliegenden Seite des Blockierelements 34 aufweisen.

### Bezugszeichenliste

- 10: Batterie
- 12: Verriegelungsmechanismus
- 14: Drehachse
- 16: Verriegelungselement
- 17: Federelement
- 18: Verriegelungsabschnitt
- 20: Betätigungsabschnitt
- 22: Fanghaken
- 24: Blockadeanschlag
- 34: Blockierelement
- 40: Gegenelement
- 42: erster Rastvorsprung
- 44: zweiter Rastvorsprung
- 46: Anlaufschräge
- 48: Gegenlager

## Patentansprüche

1. System zur Sicherung einer Batterie (10) in einem Batteriefach, mit
einem an der Batterie (10) ausgebildeten und manuell betätigbaren Verriegelungsmechanismus (12), welcher wenigstens ein Verriegelungselement (16) aufweist, das zur Verriegelung der Batterie (10) in dem Batteriefach mit einem an dem Batteriefach ausgebildeten und dem Verriegelungselement (16) zugeordneten Gegenelement (40) in Eingriff bringbar ist, und
einem an dem Batteriefach ausgebildeten Blockierelement (34), durch welches der Verriegelungsmechanismus (12) derart blockierbar ist, dass die in dem Batteriefach verriegelte Batterie (10) nicht entriegelbar ist.

2. System nach Anspruch 1,
wobei bei blockiertem Verriegelungsmechanismus (12) das wenigstens eine Verriegelungselement (16) der in dem Batteriefach verriegelten Batterie (10) nicht von dem zugeordneten Gegenelement (40) lösbar ist.

3. System nach Anspruch 1 oder 2,
wobei das wenigstens eine Verriegelungselement (16) drehbar gelagert und durch eine Verdrehung mit dem zugeordneten Gegenelement (40) in Eingriff bringbar oder von diesem lösbar ist.

4. System nach einem der vorherigen Ansprüche,
wobei das Blockierelement (34) bei blockiertem Verriegelungsmechanismus (12) eine Bewegung, insbesondere Verdrehung, des wenigstens einen Verriegelungselements (16) verhindert.

5. System nach einem der vorherigen Ansprüche,
wobei das wenigstens eine Verriegelungselement (16) zwischen dem Blockierelement (34) und dem Gegenelement (40) fixierbar ist.

6. System nach einem der vorherigen Ansprüche,
wobei der Verriegelungsmechanismus (12) zwei Verriegelungselemente (16) aufweist, denen jeweils ein Gegenelement (40) des Batteriefachs zugeordnet ist.

7. System nach Anspruch 6,
wobei beide Verriegelungselemente (16) drehbar gelagert und durch eine Verdrehung in entgegengesetzte Richtungen mit dem zugeordneten Gegenelement (40) in Eingriff bringbar oder von diesem lösbar sind.

8. System nach Anspruch 6 oder 7,
wobei das Blockierelement (34) bei blockiertem Verriegelungsmechanismus (12) eine Bewegung, insbesondere Verdrehung, beider Verriegelungselemente (16) verhindert.

9. System nach einem der Ansprüche 6 bis 8,
wobei die Verriegelungselemente (16) durch eine Bewegung aufeinander zu von ihren zugeordneten Gegenelementen (40) lösbar sind und das Blockierelement (34) bei blockiertem Verriegelungsmechanismus (12) derart zwischen den Verriegelungselementen (16) angeordnet ist, dass diese Bewegung verhindert wird.

10. System nach einem der vorherigen Ansprüche,
wobei das wenigstens eine Verriegelungselement (16) manuell betätigbar, insbesondere manuell verdrehbar, ist, um von dem zugeordneten Gegenelement (40) gelöst zu werden.

11. System nach einem der vorherigen Ansprüche,
wobei das wenigstens eine Verriegelungselement (16) als zweiarmiger Hebel ausgebildet ist.

12. System nach Anspruch 11,
wobei ein erster Arm des Hebels einen mit dem zugeordneten Gegenelement (40) in Eingriff bringbaren oder von diesem lösbaren Verriegelungsabschnitt (18) ausbildet und/oder ein zweiter Arm des Hebels einen durch einen Benutzer betätigbaren Betätigungsabschnitt (20) ausbildet.

13. System nach einem der vorherigen Ansprüche,
wobei der Verriegelungsmechanismus (12) zwei als zweiarmige Hebel ausgebildete Verriegelungselemente (16) aufweist, deren Drehachsen (14) zusammenfallen.

14. System nach einem der vorherigen Ansprüche,
wobei das Blockierelement (28) zwischen einer den Verriegelungsmechanismus (12) blockierenden Stellung und einer den Verriegelungsmechanismus (12) freigebenden Stellung verlagerbar ist.

15. System nach Anspruch 14,
wobei ein am Batteriefach ausgebildeter Schließzylinder, Elektromotor oder Elektromagnet zur Verlagerung des Blockierelements (34) vorgesehen ist.
